# EUROPEAN PATENT APPLICATION

(11) **EP 4 559 786 A1**
(43) Date of publication of application: **28.05.2025**
(21) Application number: 23869946.6
(22) Date of filing: 24.07.2023
(51) Int. Cl.: B62D 25/08

(54) **UNIVERSAL VEHICLE-BODY FRONT END STRUCTURE AND VEHICLE BODY**

(30) Priority: 28.09.2022 CN 202211192987
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHANG, Yao, Ningbo, Zhejiang 315899 (CN); DUAN, Yanyan, Ningbo, Zhejiang 315899 (CN); ZHOU, Jinbo, Ningbo, Zhejiang 315899 (CN); MAO, Yun, Ningbo, Zhejiang 315899 (CN); PAN, Fuli, Ningbo, Zhejiang 315899 (CN); GOU, Tao, Ningbo, Zhejiang 315899 (CN); HAN, Xiangyuan, Ningbo, Zhejiang 315899 (CN); YAN, Wude, Ningbo, Zhejiang 315899 (CN)
(74) Representative: Dai, Simin
(86) International application number: PCT/CN2023/108940
(87) International publication number: WO 2024/066700

(57) **Abstract**

A universal vehicle-body front end structure, comprising a vehicle body turret (10), two energy absorption box assemblies (20) extending forwards from lower portions of two sides of the vehicle body turret, a front bumper beam (30) connected to the two energy absorption box assemblies, and a front-end-frame mounting platform (40), wherein the front-end-frame mounting platform comprises two upper side rails (41) extending forwards from upper portions of the two sides of the vehicle body turret, and two energy absorption box brackets (42) respectively arranged on the energy absorption box assemblies; the two upper side rails and the two energy absorption box brackets are provided with mounting positions; and a plurality of mounting positions form a universal front-end-frame mounting connection port (50), by means of which various types of front-end frames (60) are mounted. By means of the arrangement of the plurality of mounting positions, the platformization level of a vehicle-body front end is improved, thereby simplifying the work of design and part management. Further comprised is a vehicle body, which comprises the universal vehicle-body front end structure and a front-end frame, which is mounted on the universal front-end-frame mounting connection port.

## Description

### TECHNICAL FIELD

This application relates to the field of vehicle manufacturing technology, particularly to a universal vehicle-body front end structure and a vehicle body.

### BACKGROUND

A vehicle-body front end structure is foundation for installing components in a front part of a vehicle, mainly used for installing a front frame of a vehicle. Currently, there are two main forms of the front frame: a front frame of steel material and a plastic-structured front frame. Correspondingly, the structural form and installation method of the front frame have a significant impact on a design for the front end structure of the vehicle body. With development of automotive technology, vehicle configurations are becoming increasingly rich, and vehicle styling are becoming more diverse, leading to a growing variety of front frame structures. If the vehicle-body front end structure is also designed with multiple structures to match diversification of the front frame, a large workload will be brought to preliminary design work and later management of components, and an overall cost will also increase.

Therefore, it is necessary to provide an improved universal vehicle-body front end structure and a vehicle to solve the above problems.

### SUMMARY

This application provides a universal vehicle-body front end structure that can be adapted to a variety of front frames and a vehicle body with such a universal vehicle-body front end structure.

This application discloses a universal vehicle-body front end structure, which includes a vehicle spring tower, two energy-absorbing box assemblies respectively extending forward from both lower sides of the vehicle spring tower, a front anti-collision beam connecting the two energy-absorbing box assemblies, and a front frame installation platform. The front frame installation platform includes two upper beams respectively extending forward from both upper sides of the vehicle spring tower, and two energy-absorbing box brackets respectively arranged on the two energy-absorbing box assemblies. Each upper beam is equipped with an upper mounting portion, and each energy-absorbing box bracket is equipped with a lower mounting portion. The upper mounting portions and the lower mounting portions form a universal installation interface of a front frame.

Further, the universal installation interface of the front frame includes a middle support portion arranged on the front anti-collision beam.

Further, the middle support portion includes a middle support platform and a middle fixing part both of which are arranged upwards.

Further, the upper mounting portion includes an upper mounting platform and an upper fixing part arranged downwards, and the lower mounting portion includes a lower mounting platform and a lower fixing part both of which are arranged upwards.

Further, the upper mounting platform and the lower mounting platform are arranged opposite to each other, forming a receiving space for a column of the front frame between the upper mounting platform and the lower mounting platform.

Further, the upper beam is a square tube, and the upper beam on the same side of the vehicle spring tower and the upper beam and the energy-absorbing box assembly which are on the same side of the vehicle spring tower are aligned vertically.

Further, the upper beam is equipped with a mounting portion of an engine compartment component, the mounting portion of the engine compartment component being for installing fuse boxes, wire harness brackets, or air conditioning pipes.

Further, the lower mounting platform is located above the energy-absorbing box assembly, and the lower mounting platform is equipped with a fixture positioning part. The energy-absorbing box bracket includes a pair of connecting side plates extending downwards from the lower mounting platform, and the connecting side plates are equipped with bracket mounting holes that cooperate with the energy-absorbing box assembly.

This application also discloses a vehicle body, including the aforementioned universal vehicle-body front end structure and a front frame installed on the universal installation interface of a front frame. The front frame includes a crossbeam and two columns respectively arranged on two sides of the crossbeam. An upper end and a lower end of the columns are respectively assembled to the upper mounting portion and the lower mounting portion.

Further, the front frame includes a middle bracket arranged in middle of the crossbeam, the middle bracket is assembled to the middle support portion; the front frame also includes two support arms respectively assembled to both sides of the crossbeam, the two support arms are located outside the upper beam and are trumpet-shaped, an opening of each of the two support arms faces the vehicle spring tower, each of the two support arms is equipped with an outer support beam extending downwards, and the bottom of the outer support beam is equipped with a side fixing portion extending forward.

The universal vehicle-body front end structure and the vehicle, with the installation portions on the upper beam and the energy-absorbing box bracket, forming the universal installation interface of the front frame, platformizing the vehicle-body front end structure, capable of adapting to a variety of front frames, and reducing design costs and part management costs.

It should be understood that the general description and the detailed description of the following are examples and interpretive, and cannot limit the description of this specification.

### BRIEF DESCRIPTION OF DRAWINGS

Drawings incorporated into this specification are part of this specification and show embodiments in accordance with this specification, which are used together with this specification to explain principles of this specification.
FIG. 1 is a partial perspective view of a universal vehicle-body front end structure of an example of this application.
FIG. 2 is a perspective view of an energy-absorbing box bracket in FIG. 1.
FIG. 3 is a perspective view of a front frame of an example of this application.

Reference numbers in the drawings are as follows: 10-vehicle spring tower; 20-energy-absorbing box assembly; 30-front anti-collision beam; 31-middle support portion; 311-middle support platform; 312-middle fixing part; 40-front frame installation platform; 41-upper beam; 411-upper mounting portion; 412-upper mounting platform; 413-upper fixing part; 414-mounting portion of engine compartment component; 42-energy-absorbing box bracket; 421-lower mounting portion; 422-lower mounting platform; 423-lower fixing part; 424-fixture positioning part; 425-connecting side plate; 426-bracket mounting hole; 427-sensor mounting plate; 50-universal installation interface of a front frame; 60-front frame; 61-crossbeam; 611-bracket mounting portion; 62-column; 621-upper connecting portion; 622-lower connecting portion; 63-middle bracket; 631-middle connecting portion; 64-support arm; 65-outer support beam; 66-side fixing portion.

### DETAILED DESCRIPTION

Embodiments will be described in detail herein, and examples of the embodiments are represented in the drawings. When the following description involves the drawings, unless otherwise indicated, the same numbers in different drawings represent the same or similar elements. The embodiments described in the following examples are not all the embodiments that are consistent with this specification. On the contrary, they are only examples of the apparatus and methods that are consistent with some aspects of the specification as described in attached claims.

Terms used in this specification are used only for the purpose of describing specific embodiments and are not intended to limit this specification. The singular forms "a", "said", and "the" used in this specification and the attached claims also intend to include plural forms unless the context clearly indicates otherwise. It should also be understood that the term "and/or" used in this specification refers to any or all possible combinations of one or more associated listed items.

It should be understood that although terms first, second, third, etc., may be used in this specification to describe various information, this information should not be limited to these terms. These terms are only used to distinguish the same type of information from each other. For example, without departing from the scope of this specification, first information can also be called second information, and similarly, the second information can also be called the first information. Depending on the context, a word "if" used here can be interpreted as "when" or "while" or "in response to determining".

Next, the embodiments of this specification will be described in detail.

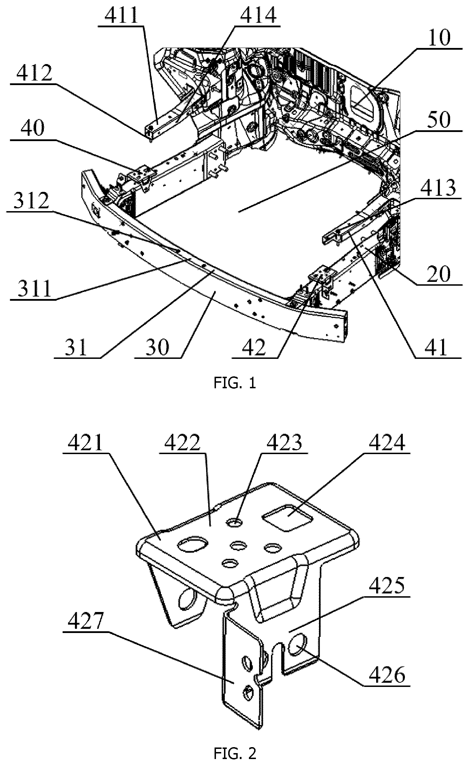

As shown in FIG. 1, a universal vehicle-body front end structure of this disclosure includes a vehicle spring tower 10, two energy-absorbing box assemblies 20 respectively extending forward from both lower sides of the vehicle spring tower 10, a front anti-collision beam 30 connecting the two energy-absorbing box assemblies 20, and a front frame installation platform 40. The front frame installation platform 40 includes two upper beams 41 respectively extending forward from both upper sides of the vehicle spring tower 10 and two energy-absorbing box brackets 42 respectively arranged on the energy-absorbing box assemblies 20. These parts are assembled into a whole, which improves platformization level of the vehicle-body front end, and is adaptable to assembling of various front frames.

The upper beam 41 is equipped with an upper mounting portion 411 and a mounting portion of engine compartment component 414. The upper mounting portion 411 includes an upper mounting platform 412 and an upper fixing part 413 which are arranged downwards, where the upper mounting portion is used to provide upper support for the front frame.

The upper beam 41 is a hollow square tube, and there is a space that can accommodate other parts and is formed on each of two sides of the upper beam 41. The mounting portion of engine compartment component 414 is arranged on multiple surfaces of the square tube to install parts such as a fuse box, wire harness brackets, or air conditioning pipes in the engine compartment. By setting up installation portions for various parts on the upper beam 41, an installation process is simplified, and the platformization level of the vehicle-body front end structure is improved.

Please refer to FIG. 2, the energy-absorbing box bracket 42 is U-shaped, including a lower mounting portion 421 and a fixture positioning part 424, where there are a pair of connecting side plates 425 extending downwards from the lower mounting portion 421. There are two lower mounting portions 421 and two upper mounting portions 411, and these four mounting portions form a universal installation interface of a front frame 50, which can adapt to various structures of the front frame, improving the platformization level of the vehicle-body front end structure.

In a preferred embodiment, the universal installation interface of the front frame 50 also includes a middle support portion 31 arranged on the upper side of the front anti-collision beam 30. The middle support portion 31 and the above four mounting portions are used to install the front frame together, improving the platformization level of the vehicle-body front end structure while also improving strength of the front frame.

In this embodiment, the middle support portion 31 includes a middle support platform 311 and a middle fixing part 312, providing middle support for the front frame.

The lower mounting portion 421 includes a lower mounting platform 422 and a lower fixing part 423, both of which are arranged upwards, with the lower mounting portion 421 providing lower support for the front frame. The lower mounting platform 422 and the upper mounting platform 412 are arranged opposite to each other, forming a receiving space for a column of the front frame for installing the column of the front frame.

In a preferred embodiment, the two lower mounting platforms 422 and the middle support platform 311 form a mounting plane together, and the front frame is installed on the mounting plane, facilitating assembly of the front frame.

The fixture positioning part 424 is arranged on the lower mounting platform 422, providing positioning for the front frame-related fixtures. In this embodiment, the fixture positioning part 424 is a combination of round holes and square holes, which is simple to manufacture and has a good positioning effect.

The connecting side plates 425 are located on two sides of the energy-absorbing box assembly 20, equipped with bracket mounting holes 426. The bracket mounting holes 426 cooperate with the energy-absorbing box assembly 20 to fix the energy-absorbing box bracket 42. Shapes of the connecting side plates 425 on two sides of the energy-absorbing box assembly 20 are different, and numbers of installation holes on two sides are different, preventing the energy-absorbing box bracket 42 from being installed on the wrong left or right side. In this embodiment, the connecting side plate 425 on one side is square-shaped, and the connecting side plate 425 on the other side is trapezoidal-shaped, with the square side having two installation holes, and the trapezoidal side having one installation hole.

In this embodiment, the connecting side plate 425 is also equipped with a sensor mounting plate 427, arranged perpendicular to the connecting side plate 425 and used to install sensors and other parts in the engine compartment.

In this embodiment, the universal vehicle-body front end structure is subjected to simulation analysis to obtain an optimal solution of the vehicle-body front end structure. Even if a form of the front frame changes, the universal vehicle-body front end structure can also meet strength requirements of the vehicle body. Sharing of one set of vehicle-body front end structure can effectively reduce simulation workload of each vehicle body model, simplify a positioning structure of fixtures, thereby improving the platformization level and reducing costs.

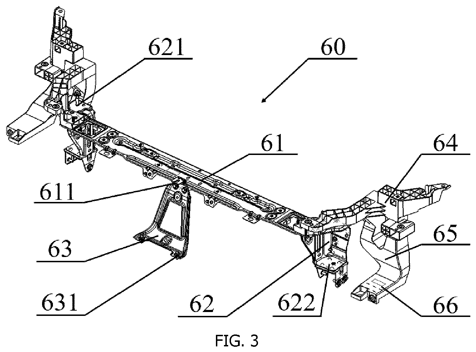

This embodiment also provides a vehicle body, including the aforementioned universal vehicle-body front end structure and a front frame installed on the universal installation interface of the front frame. As shown in FIG. 3, a front frame 60 installed on the universal vehicle-body front end structure is shown. The front frame 60 includes a crossbeam 61, two columns 62, and two support arms 64. These parts are connected into a whole, and can also be integrated or partially integrated. The columns 62 are equipped with connecting portions for connecting with the universal installation interface of the front frame 50.

Specifically, an upper end of each column 62 is equipped with an upper connecting portion 621, and a lower end of each column 62 is equipped with a lower connecting portion 622. The upper connecting portion 621 is connected to the upper mounting portion 411, and the lower connecting portion 622 is connected to the lower mounting portion 421, thereby accommodating the column 62 in a space formed by the upper mounting platform 412 and the lower mounting platform 422. By setting up four connecting portions on each column 62, corresponding to the four mounting portions of the universal installation interface of the front frame 50, the front frame 60 can be efficiently installed, improving the platformization level.

In a preferred embodiment, the front frame 60 also includes a middle bracket 63. The crossbeam 61 is equipped with a bracket mounting portion 611, an upper part of the middle bracket 63 is connected to the crossbeam 61, and is fixed on the crossbeam 61 through the bracket mounting portion 611. Bottom of the middle bracket 63 is equipped with a middle connecting portion 631. By the middle connecting portion 631 together with the four connecting portions of the column, the front frame 60 is installed on the universal installation interface of the front frame 50, improving the platformization level while enhancing the strength of the front frame 60.

When the front frame 60 is equipped with corresponding connecting portions for the universal installation interface of the front frame 50, rest of a structure of the front frame 60 can be changed according to a model, material, and other requirements. In this embodiment, the material of the front frame 60 is metal or plastic, and the front frame 60 also includes two support arms 64. The support arms 64 are located outside the upper beam 41, leaving a space between the support arms 64 and the upper beam 41 for accommodating other parts in the engine compartment. In this embodiment, the support arms 64 are arc-shaped, and the two support arms 64 are trumpet-shaped, and an opening of each of the two support arms faces the vehicle spring tower 10.

**The** support arm 64 is equipped with an outer support beam 65 extending downwards, and bottom of the outer support beam 65 is equipped with a side fixing portion 66 extending forward, with the side fixing portion 66 located outside the column 62. By the support arms 64, the outer support beam 65, and the side fixing portion 66, the front frame 60 is connected with other parts of the vehicle body.

The above description is only the preferred embodiment of this application, and it is not intended to limit this application in any form. Although this application has disclosed the preferred embodiments above, the preferred embodiments are not intended to limit this application. Any person skilled in the art, without departing from the scope of this application, can make slight modifications or embellishments as equivalent changes to the above embodiments to obtain equivalent embodiments. Any simple modifications, equivalent changes, and embellishments that do not deviate from the content of the technical solution of this application and are based on the essence of this application technology, are still within the scope of this application technology.

## Claims

1. A universal vehicle-body front end structure, comprising: a vehicle spring tower, two energy-absorbing box assemblies respectively extending forward from both lower sides of the vehicle spring tower, a front anti-collision beam connecting the two energy-absorbing box assemblies, and a front frame installation platform, wherein the front frame installation platform comprises two upper beams respectively extending forward from both upper sides of the vehicle spring tower and two energy-absorbing box brackets respectively arranged on the two energy-absorbing box assemblies, wherein each upper beam is equipped with an upper mounting portion, and each energy-absorbing box bracket is equipped with a lower mounting portion, with the upper mounting portions and the lower mounting portions forming a universal installation interface of a front frame.

2. The universal vehicle-body front end structure according to claim 1, wherein the universal installation interface of the front frame comprises a middle support portion arranged on the front anti-collision beam.

3. The universal vehicle-body front end structure according to claim 2, wherein the middle support portion comprises a middle support platform and a middle fixing part both of which are arranged upwards.

4. The universal vehicle-body front end structure according to claim 1, wherein the upper mounting portion includes an upper mounting platform and an upper fixing part both of which are arranged downwards, and the lower mounting portion includes a lower mounting platform and a lower fixing part both of which are arranged upwards.

5. The universal vehicle-body front end structure according to claim 4, wherein the upper mounting platform and the lower mounting platform are arranged opposite to each other, forming a receiving space for a column of the front frame between the upper mounting platform and the lower mounting platform.

6. The universal vehicle-body front end structure according to claim 1, wherein the upper beam is a square tube, and the upper beam and the energy-absorbing box assembly which are on the same side of the vehicle spring tower are aligned vertically.

7. The universal vehicle-body front end structure according to claim 1, wherein the upper beam is equipped with a mounting portion of an engine compartment component, the mounting portion of the engine compartment component being for installing fuse boxes, wire harness brackets, or air conditioning pipes.

8. The universal vehicle-body front end structure according to claim 4, wherein the lower mounting platform is located above the energy-absorbing box assembly, the lower mounting platform is equipped with a fixture positioning part, the energy-absorbing box bracket includes a pair of connecting side plates extending downwards from the lower mounting platform, and the connecting side plates are equipped with bracket mounting holes that cooperate with the energy-absorbing box assembly.

9. A vehicle body, comprising: the universal vehicle-body front end structure according to any one of claims 1-8 and a front frame installed on the universal installation interface of the front frame, wherein the front frame comprises a crossbeam and two columns respectively arranged on two sides of the crossbeam, and an upper end and a lower end of each of the columns are respectively assembled to the upper mounting portion and the lower mounting portion.

10. The vehicle body according to claim 9, wherein the front frame comprises a middle bracket arranged in middle of the crossbeam, the middle bracket is assembled to the middle support portion; the front frame also comprises two support arms respectively assembled to two sides of the crossbeam, the two support arms are located outside the upper beam and are trumpet-shaped, an opening of each of the two support arms faces the vehicle spring tower, each of the two support arms is equipped with an outer support beam extending downwards, and bottom of the outer support beam is equipped with a side fixing portion extending forward.
